# EUROPEAN PATENT APPLICATION

(11) **EP 3 263 333 A1**
(43) Date of publication of application: **03.01.2018**
(21) Application number: 16382305.7
(22) Date of filing: 29.06.2016
(51) Int. Cl.: B32B 27/08, B32B 27/30, B32B 27/32

(54) **MULTILAYER FILMS AND PACKAGES COMPRISING THE SAME**

(71) Applicant: Dow Global Technologies LLC, Midland, MI 48674 (US)
(72) Inventor: Lee, Jong-Young, Texas, TX Texas 77541 (US); Lin, Yijian, Texas, TX Texas 77541 (US); Hill, Martin, 43006 Tarragona (ES); Bilgen, Mustafa, Texas, TX Texas 77541 (US)
(74) Representative: Elzaburu S.L.P.

(57) **Abstract**

The present invention provides multilayer films and packages formed from such films. In one aspect, a multilayer film comprises Layer A which is a sealant layer having a top facial surface and a bottom facial surface, wherein Layer A comprises (a) a copolymer comprising ethylene and alkylacrylate, wherein the copolymer has a melt index (I₂) of 2 to 30 g/10 minutes and wherein the total amount of alkylacrylate in the copolymer is 5 to 30 weight percent based on the weight of the copolymer, and (b) a polyolefin elastomer having a crystallinity of 30% or less and a melt index (I₂) of 1.0 g/10 minutes or more; and Layer B having a top facial surface and a bottom facial surface, wherein the top facial surface of Layer B is in adhering contact with a bottom facial surface of Layer A.

## Description

### Field

The present invention relates to multilayer films and to packages comprising such films.

### Introduction

Heat sealable and easy-opening films are employed on a large scale for temporarily closing containers that include, for example, food products. For example, the peelable film can be sealed to a rigid container such as a tray. During use, a consumer tears away the peelable film.

Heat sealable films must be capable of being sealed upon the application of heat. During typical sealing processes, the backing or web layer of the film comes into direct contact with a heated surface such as a sealing jaw. Heat is thus transferred through the backing layer of the film to melt and fuse the inner sealant layer to form a seal.

The force required to pull a seal apart is called "seal strength" or "heat seal strength" which can be measured in accordance with ASTM F88. The desired seal strength varies according to specific end user applications. For flexible packaging applications, such as cereal liners, snack food packages, cracker tubes and cake mix liners, the seal strength desired is generally in the range of about 1-9 pounds per inch. For example, for easy-open cereal box liners, a seal strength in the range of about 2-3 pounds per inch is commonly specified, although specific targets vary according to individual manufactures requirements. In addition to flexible packaging application, a sealable and peelable film can also be used in rigid package applications, such as lids for convenience items (e.g., snack food such as puddings) and medical devices. Typical rigid packages have a seal strength of about 1-5 pounds per inch.

It is also desirable to have a low heat seal initiation temperature which helps to ensure fast packaging line speeds and a broad sealing window which could accommodate variability in process conditions, such as pressure and temperature.

One type of food package is formed by sealing a lidding film to an amorphous polyethylene terephthalate (APET or A-PET) sheet or tray. There are two typical approaches for sealing a lidding film to an A-PET sheet or tray. In one approach, a polyethylene-based sealant layer is coated or laminated on the A-PET sheet or tray to facilitate adhesion of the sheet or tray to the lidding film. This approach increases the manufacturing cost of the A-PET sheet or tray and inhibits recyclability of the sheet or tray. The other approach involves using glycol modified polyethylene terephthalate (PET-G) as a sealant layer in the lidding film. This approach results in the need for a tie layer between the PET-G sealant layer and the remainder of the lidding film and requires drying time for the PET-G resin, which increase costs and difficulty of manufacture of the lidding film.

There remains a need for new approaches to sealing lidding films to A-PET sheets and trays, and sheets and trays formed from similar materials, that provide desirable seal properties.

### Summary

The present invention provides multilayer films that incorporate a sealant layer that can be used, in some applications, as a lidding film, or a component of a lidding film. For example, in some embodiments, a multilayer film of the present invention can provide a sealant layer that facilitates the adhesion of a lidding film to an A-PET sheet or tray, or to a sheet or tray formed from a similar material. In some aspects, the present invention advantageously enables recyclability and reduces the manufacturing costs of A-PET sheets and trays for some applications by providing a sealant layer on the lidding film such that a sealant layer is not required on the A-PET sheet or tray. Further, in some aspects, a polyethylene-based sealant layer in the multilayer film facilitates manufacture of the lidding film using a blown film process while avoiding disadvantages of using a PETG-type sealant.

In one aspect, the present invention provides a multilayer film that comprises Layer A which is a sealant layer having a top facial surface and a bottom facial surface, wherein Layer A comprises (a) a copolymer comprising ethylene and alkylacrylate, wherein the copolymer has a melt index (I₂) of 2 to 30 g/10 minutes and wherein the total amount of alkylacrylate in the copolymer is 5 to 30 weight percent based on the weight of the copolymer; and (b) a polyolefin elastomer having a crystallinity of 30% or less and a melt index (I₂) of 1.0 g/10 minutes or more, and Layer B having a top facial surface and a bottom facial surface, wherein the top facial surface of Layer B is in adhering contact with a bottom facial surface of Layer A.

In another aspect, the present invention relates to a food package comprising any of the multilayer films disclosed herein and a tray, wherein the top facial surface of Layer A is sealed to at least a portion of the tray.

These and other embodiments are described in more detail in the Detailed Description.

### Detailed Description

Unless stated to the contrary, implicit from the context, or customary in the art, all parts and percents are based on weight, all temperatures are in ° C, and all test methods are current as of the filing date of this disclosure.

The term "composition," as used herein, refers to a mixture of materials which comprises the composition, as well as reaction products and decomposition products formed from the materials of the composition.

"Polymer" means a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities (for example, catalyst residues) may be incorporated into and/or within the polymer. A polymer may be a single polymer, a polymer blend or polymer mixture.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The terms "olefin-based polymer" or "polyolefin", as used herein, refer to a polymer that comprises, in polymerized form, a majority amount of olefin monomer, for example ethylene or propylene (based on the weight of the polymer), and optionally may comprise one or more comonomers.

"Polypropylene" means a polymer having greater than 50 wt% units derived from propylene monomer.

The term, "ethylene/α-olefin interpolymer," as used herein, refers to an interpolymer that comprises, in polymerized form, a majority amount of ethylene monomer (based on the weight of the interpolymer), and an α-olefin.

The term, "ethylene/α-olefin copolymer," as used herein, refers to a copolymer that comprises, in polymerized form, a majority amount of ethylene monomer (based on the weight of the copolymer), and an α-olefin, as the only two monomer types.

The term "in adhering contact" and like terms mean that one facial surface of one layer and one facial surface of another layer are in touching and binding contact to one another such that one layer cannot be removed from the other layer without damage to the interlayer surfaces (i.e., the in-contact facial surfaces) of both layers.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

"Polyethylene" or "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392, which is hereby incorporated by reference). LDPE resins typically have a density in the range of 0.916 to 0.935 g/cm³.

The term "LLDPE", includes both resin made using the traditional Ziegler-Natta catalyst systems as well as single-site catalysts, including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

The term "MDPE" refers to polyethylenes having densities from 0.926 to 0.935 g/cm³. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/cm³, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm³, which are generally prepared with Ziegler-Natta catalysts, chrome catalysts, or single-site catalysts including, but not limited to, bis-metallocene catalysts and constrained geometry catalysts.

In one aspect, the present invention provides a multilayer film that comprises Layer A, which is a sealant layer having a top facial surface and a bottom facial surface, wherein Layer A comprises (a) a copolymer comprising ethylene and alkylacrylate, wherein the copolymer has a melt index (I₂) of 2 to 30 g/10 minutes and wherein the total amount of alkylacrylate in the copolymer is 5 to 30 weight percent based on the weight of the copolymer, and (b) a polyolefin elastomer having a crystallinity of 30% or less and a melt index (I₂) of 1.0 g/10 minutes or more; and Layer B having a top facial surface and a bottom facial surface, wherein the top facial surface of Layer B is in adhering contact with a bottom facial surface of Layer A.

In some embodiments, the total amount of alkylacrylate in the copolymer is 15-25 weight percent based on the weight of the copolymer. It should be understand that the copolymer can comprises ethylene and ethylacrylate in some embodiments, ethylene and methylacrylate in some embodiments, and ethylene, ethylacrylate, and methylacrylate in some embodiments. In some embodiments, the copolymer comprises ethylene and ethylacrylate.

In some embodiments, the melt index (I₂) of the copolymer is 5 to 25 g/10 minutes.

Layer A, in some embodiments, comprises 40 to 90 weight percent of the copolymer comprising ethylene and alkylacrylate, based on the weight of Layer A. In some embodiments, Layer A comprises 50 to 80 weight percent of the copolymer comprising ethylene and alkylacrylate, based on the weight of Layer A. Layer A, in some embodiments, comprises 60 to 75 weight percent of the copolymer comprising ethylene and alkylacrylate, based on the weight of Layer A.

In some embodiments, the polyolefin elastomer comprises a polyethylene elastomer, a polypropylene elastomer, an ethylene vinylacetate elastomer, or a combination thereof. In some embodiments where the polyolefin elastomer comprises a polyethylene elastomer, the polyethylene elastomer has a density of 0.853 to 0.890 g/cm³. In some embodiments, the polyolefin elastomer is an ethylene/α-olefin interpolymer having a density of 0.853 to 0.890 g/cm³.

The polyolefin elastomer, in some embodiments, has a crystallinity of 25% or less. In some embodiments, the polyolefin elastomer has a crystallinity of 20% or less. In some embodiments, the polyolefin elastomer has a melt index (I₂) of 4.0 g/10 minutes or more.

In some embodiments, Layer A comprises 10 to 60 weight percent of the polyolefin elastomer based on the weight of Layer A. Layer A, in some embodiments, comprises 20 to 50 weight percent of the polyolefin elastomer based on the weight of Layer A. In some embodiments, Layer A comprises 25 to 40 weight percent of the polyolefin elastomer based on the weight of Layer A.

In some embodiments, Layer A comprises at least one additional polymer in addition to the polyolefin elastomer and the copolymer comprising ethylene and alkylacrylate. In some embodiments, the at least one additional polymer comprises ethylene vinyl acetate.

Layer A can be corona treated in some embodiments.

In some embodiments, Layer B comprises polyethylene.

In some embodiments, a multilayer film further comprises at least one additional layer, wherein the top facial surface of Layer A is the top facial surface of the film. The at least one additional layer, in some embodiments, comprises polyethylene terephthalate, polypropylene, polyethylene, polyamide, ethylene vinyl alcohol, polycarbonate, polystyrene, poly(methyl methacrylate), or combinations thereof. In some embodiments, the additional layer is laminated to the bottom facial surface of Layer B. The additional layer, in some embodiments, is coextruded with Layer A and Layer B.

The multilayer film can comprise a combination of two or more embodiments as described herein.

Some embodiments of the present invention relate to packages such as food packages. In some embodiments, a food package of the present invention comprises a multilayer film according to any of the embodiments disclosed herein and a tray, wherein the top facial surface of Layer A is sealed to at least a portion of the tray. In some embodiments, the tray is formed from amorphous polyethylene terephthalate.

Food packages of the present invention can comprise a combination of two or more embodiments as described herein.

### Sealant Layer

Multilayer films of the present invention comprise a first layer (Layer A) which is a sealant layer. As set forth herein, the sealant layer comprises a blend of polymers that provides desirable seal strength when sealed to a tray formed from amorphous polyethylene terephthalate or similar materials. The sealant layer used in multilayer films of the present invention can provide other advantages over incumbent approaches for sealing a lidding film to an A-PET sheet or tray.

In one embodiment, a sealant layer comprises (a) a copolymer comprising ethylene and alkylacrylate, wherein the copolymer has a melt index (I₂) of 2 to 30 g/10 minutes and wherein the total amount of alkylacrylate in the copolymer is 5 to 30 weight percent based on the weight of the copolymer, and (b) a polyolefin elastomer having a crystallinity of 30% or less and a melt index (I₂) of 1.0 g/10 minutes or more.

The copolymer comprising ethylene and alkylacrylate can be, for example, an ethylene ethylacrylate copolymer, ethylene methylacrylate copolymer, or ethylene butylacrylate, or combinations thereof. In some embodiments, the copolymer comprising ethylene and alkylacrylate is ethylene ethylacrylate.

The copolymer comprising ethylene and alkylacrylate has an acrylate content of 5 to 30 weight percent based on the weight of the copolymer, in some embodiments. In some embodiments, the copolymer comprising ethylene and alkylacrylate has an acrylate content of 15 to 25 weight percent based on the weight of the copolymer. As used herein, the acrylate content of an ethylene alkylacrylate copolymer is measured using ASTM D3594.

In some embodiments, the melt index (I₂) of the copolymer comprising ethylene and alkylacrylate has a melt index of 2 g/10 minutes to 30 g/10 minutes. All individual values and subranges from 2 g/10 minutes to 30 g/10 minutes are included herein and disclosed herein. For example, the copolymer comprising ethylene and alkylacrylate can have a melt index from a lower limit of 2, 3, 4, 5, 10, 13, 15, 20, 22, or 25 g/10 minutes to an upper limit of 5, 7, 10, 13, 15, 17, 20, 22, 25, 28, or 30 g/10 minutes. In a particular aspect of the invention, the copolymer comprising ethylene and alkylacrylate has a melt index of 5 g/10 minutes to 25 g/10 minutes.

In some embodiments, the copolymer comprising ethylene and alkylacrylate comprises 40 to 90 weight percent of Layer A, based on the weight of Layer A. Layer A, in some embodiments, comprises 50 to 80 weight percent of the copolymer comprising ethylene and alkylacrylate based on the weight of Layer A. In some embodiments, the copolymer comprising ethylene and alkylacrylate comprises 60 to 75 weight percent of Layer A, based on the weight of Layer A.

Examples of commercially available ethylene alkylacrylate copolymers that can be used in the sealant layer include ethylene ethylacrylate copolymers commercially available from The Dow Chemical Company under the name AMPLIFY^{™} EA including, for example, AMPLIFY^{™} EA100, AMPLIFY^{™} EA101, AMPLIFY^{™} EA102 and AMPLIFY^{™} EA103, as well as ethylene alkylacrylate copolymers commercially available from DuPont under the name Elvaloy.

In addition to the copolymer comprising ethylene and alkylacrylate, the sealant layer (Layer A) also comprises a polyolefin elastomer having a crystallinity of 30% or less and a melt index (I₂) of 1.0 g/10 minutes or more.

The polyolefin elastomer can be a polyethylene elastomer, a polypropylene elastomer, an ethylene vinyl elastomer, or combinations thereof.

The polyolefin elastomer has a crystallinity of 30% or less. In some embodiments, the polyolefin elastomer has a crystallinity of 25% or less. The polyolefin elastomer has a crystallinity of 20% or less in some embodiments.

In some embodiments, the polyolefin elastomer has a melt index (I₂) of 1.0 g/10 minutes or more. The polyolefin elastomer has a melt index of up to 30 g/10 minutes in some embodiments. All individual values and subranges from 1.0 g/10 minutes to 30 g/10 minutes are included herein and disclosed herein. For example, the polyolefin elastomer can have a melt index from a lower limit of 1, 2, 3, 4, 5, 10, 13, 15, 20, 22, or 25 g/10 minutes to an upper limit of 5, 7, 10, 13, 15, 17, 20, 22, 25, 28, or 30 g/10 minutes. In a particular aspect of the invention, the polyolefin elastomer has a melt index of 4 g/10 minutes to 15 g/10 minutes.

In some embodiments, the polyolefin elastomer has a density of 0.853 to 0.890 g/cm³. All individual values and subranges from 0.853 g/cm³ to 0.890 g/cm³ are included herein and disclosed herein; for example, the density of the polyolefin elastomer can be from a lower limit of 0.853, 0.855, 0.857, 0.860, 0.865, 0.870, or 0.875 g/cm³ to an upper limit of 0.870, 0.875, 0.880, 0.885, or 0.890 g/cm³. In some embodiments, the polyolefin elastomer has a density from 0.853 to 0.885 g/cm³.

In some embodiments, the polyolefin elastomer comprises 10 to 60 weight percent of Layer A, based on the weight of Layer A. Layer A, in some embodiments, comprises 20 to 50 weight percent of the polyolefin elastomer based on the weight of Layer A. In some embodiments, the polyolefin elastomer comprises 25 to 40 weight percent of Layer A, based on the weight of Layer A.

Examples of polyolefin elastomers that can be used in the sealant layer (Layer A) include those commercially available from The Dow Chemical Company under the names AFFINITY™, ENGAGE™, VERSIFY™, and AMPLIFY™ TY including, for example, AFFINITY™ EG 8100G, AFFINITY™ EG 8200G, VERSIFY^{™}3401, ENGAGE^{™} 8200, and AMPLIFY™ TY1052H.

In some embodiments, the sealant layer (Layer A) further comprises an additional polymer. In some such embodiments, the sealant layer (Layer A) further comprises ethylene acetate.

When the sealant layer comprises an ethylene acetate copolymer, the ethylene acetate copolymer can be, for example, ethylene vinyl acetate. In some embodiments, the ethylene vinyl acetate can have a vinyl acetate content of 5% to 40%. In some embodiments, the ethylene vinyl acetate has a vinyl acetate content of 5% to 30%. The ethylene vinyl acetate, in some embodiments, has a vinyl acetate content of 15% to 25%. As used herein, the vinyl acetate content of an ethylene vinyl acetate copolymer is measured using ASTM 5594.

In some embodiments, the melt index (I₂) of the ethylene acetate copolymer has a melt index of 2 g/10 minutes to 30 g/10 minutes. All individual values and subranges from 2 g/10 minutes to 30 g/10 minutes are included herein and disclosed herein. For example, the ethylene acetate copolymer can have a melt index from a lower limit of 2, 3, 4, 5, 10, 13, 15, 20, 22, or 25 g/10 minutes to an upper limit of 5, 7, 10, 13, 15, 17, 20, 22, 25, 28, or 30 g/10 minutes. In a particular aspect of the invention, the ethylene acetate copolymer has a melt index of 5 g/10 minutes to 25 g/10 minutes.

In some embodiments, the ethylene acetate copolymer comprises 40 to 90 weight percent of Layer A, based on the weight of Layer A. Layer A, in some embodiments, comprises 50 to 80 weight percent of the ethylene acetate copolymer based on the weight of Layer A. In some embodiments, the ethylene acetate copolymer comprises 60 to 75 weight percent of Layer A, based on the weight of Layer A.

Examples of ethylene acetate copolymer that can be used in the sealant layer include ethylene vinyl acetate copolymers commercially available from DuPont under the name Elvax including, for example, Elvax 450A and Elvax 260.

In some embodiments, minor amounts of other polymers can also be included in Layer A. Examples of such other polymers include, without limitation, polyethylene (homopolymers or copolymers), polypropylene (homopolymers or copoylmers), ethylene acrylic acid, ethylene methacrylic acid, polybutene, polystyrene, polyester, and others.

In some embodiments, the sealant layer (Layer A) can be corona treated using techniques known to those of skill in the art prior to sealing the multilayer film.

### Layer B

Multilayer films of the present invention include a second layer (Layer B) having a top facial surface and a bottom facial surface, wherein the top facial surface of Layer B is in adhering contact with a bottom facial surface of the sealant layer (Layer A).

In general, Layer B can be formed from any polymer or polymer blend known to those of skill in the art. In some embodiments, Layer B comprises a polyolefin.

Layer B, in some embodiments, comprises polyethylene. Polyethylene can be particularly desirable in some embodiments as it can permit the coextrusion of Layer B with the sealant layer. In such embodiments, Layer B can comprise any polyethylene known to those of skill in the art to be suitable for use as a layer in a multilayer film based on the teachings herein. For example, the polyethylene that can be used in Layer B, in some embodiments, can be ultralow density polyethylene (ULDPE), low density polyethylene (LDPE), linear low density polyethylene (LLDPE), medium density polyethylene (MDPE), high density polyethylene (HDPE), high melt strength high density polyethylene (HMS-HDPE), ultrahigh density polyethylene (UHDPE), enhanced polyethylenes, and others.

Layer B, in some embodiments, comprises polypropylene. The polypropylene can comprise propylene/α-olefin copolymer, propylene homopolymer, or blends thereof. The propylene/α-olefin copolymer, in various embodiments, can be random copolymer polypropylene (rcPP), impact copolymer polypropylene (hPP + at least one elastomeric impact modifier) (ICPP), high impact polypropylene (HIPP), high melt strength polypropylene (HMS-PP), isotactic polypropylene (iPP), syndiotactic polypropylene (sPP), propylene based copolymers with ethylene, and combinations thereof.

### Other Layers

Some embodiments of multilayer films of the present invention can include layers beyond those described above. In such embodiments comprising three or more layers, the top facial surface of Layer A would still be the top facial surface of the film. In other words, any additional layers would be in adhering contact with a bottom facial surface of Layer B, or another intermediate layer.

For example, a multilayer film can further comprise other layers typically included in multilayer films depending on the application including, for example, barrier layers, tie layers, polyethylene layers, other polypropylene layers, etc.

Depending on the composition of the additional layer and the multilayer film, in some embodiments, the additional layer can be coextruded with other layers in the film, while in other embodiments, the additional layer can be laminated to a bottom facial surface of an adjacent layer.

In some embodiments, the multilayer film comprises a polyethylene terephthalate layer, and a top facial surface of the polyethylene terephthalate layer is laminated to a bottom facial surface of Layer B. In such embodiments, any polyethylene terephthalate known to those of skill in the art based on the teachings herein can be used.

In other embodiments, one or more additional layers can comprise polypropylene, polyethylene, polyamide, ethylene vinyl alcohol, polycarbonate, polystyrene, poly(methyl methacrylate), or combinations thereof.

### Additives

It should be understood that any of the foregoing layers can further comprise one or more additives as known to those of skill in the art such as, for example, antioxidants, ultraviolet light stabilizers, thermal stabilizers, slip agents, antiblock, pigments or colorants, processing aids, crosslinking catalysts, flame retardants, fillers and foaming agents.

Multilayer films comprising the combinations of layers disclosed herein can have a variety of thicknesses depending, for example, on the number of layers, the intended use of the film, and other factors. Multilayer films of the present invention, in some embodiments, have a thickness of 25 to 200 microns (typically, 35-150 microns).

Multilayer films of the present invention, in some embodiments, can advantageously provide desirable seal properties such as a heat seal strength of at least 800 g/25 mm when sealed to amorphous polyethylene terephthalate and measured in accordance with ASTM F88, and/or a heat seal initiation temperature less than or equal to 120° C. In some embodiments, multilayer films of the present invention can provide a seal strength of 800 to 1600 g/25mm when sealed to an amorphous polyethylene terephthalate and measured in accordance with ASTM F88. In some embodiments, a multilayer film of the present invention can provide a seal strength of at least 850 g/25 mm when sealed to an amorphous polyethylene terephthalate and measured in accordance with ASTM F88.

### Methods of Preparing Multilayer Films

Multilayer films can be formed using techniques known to those of skill in the art based on the teachings herein. For example, for those layers that can be coextruded, such layers can be coextruded as blown films or cast films using techniques known to those of skill in the art based on the teachings herein. In particular, based on the compositions of the different film layers disclosed herein, blown film manufacturing lines and cast film manufacturing lines can be configured to coextrude multilayer films of the present invention in a single extrusion step using techniques known to those of skill in the art based on the teachings herein.

In some embodiments, multilayer films may comprise a plurality of layers that are coextruded and then laminated to one or more additional layers. In such embodiments, a facial surface of the coextruded film can be laminated to a facial surface of another film layer using techniques known to those of skill in the art based on the teachings herein. For example, in some embodiments where the multilayer film comprises a polyethylene terephthalate layer, the polyethylene terephthalate layer can be laminated to a bottom facial surface of Layer B or another intermediate layer with a top facial surface of the sealant layer remaining as the top facial surface of the laminated multilayer film.

As indicated above, in some embodiments, the sealant layer (Layer A) can be corona treated using techniques known to those of skill in the art based on the teachings herein.

### Packages

Multilayer films of the present invention can be used to form a package. For example, multilayer films of the present invention can be sealed to a sheet or tray to form a food package, in some embodiments. Examples of food that can be included in such packages include meats, cheeses, and other foods.

The tray or sheet can be formed from polyesters such as amorphous polyethylene terephthalate, oriented polyethylene terephthalate, polybutylene terephthalate, polytrimethylene terephthalate, and polyethylene napthalate. Multilayer films of the pesent invention can be particularly well-suited for use with trays or sheets formed from polyethylene terephthalate or amorphous polyethylene terephthalate. Such trays or sheets can be formed using techniques known to those of skill in the art based on the teachings herein and based on the particular use for the package (e.g., type of food, amount of food, etc.).

A multilayer film of the present invention can be sealed to the sheet or tray via the sealant layer (Layer A) of the film using techniques known to those of skill in the art based on the teachings herein.

### TEST METHODS

Unless otherwise indicated herein, the following analytical methods are used in describing aspects of the present invention:

### Density

Samples for density measurement are prepared according to ASTM D 1928. Polymer samples are pressed at 190° C and 30,000 psi (207 MPa) for three minutes, and then at 21º C and 207 MPa for one minute. Measurements are made within one hour of sample pressing using ASTM D792, Method B.

### Melt Index

Melt indices I₂ (or I₂) and I₁₀ (or I₁₀) are measured in accordance with ASTM D-1238 at 190° C and at 2.16 kg and 10 kg load, respectively. Their values are reported in g/10 min. "Melt flow rate" is used for polypropylene based resins and determined according to ASTM D1238 (230° C at 2.16 kg).

### Percent Crystallinity

Differential Scanning Calorimetry (DSC) is used to measure the melting and crystallization behavior of a polymer over a wide range of temperatures. A TA Instruments Q1000 DSC, equipped with an RCS (refrigerated cooling system) and an autosampler are used to perform this analysis. During testing, a nitrogen purge gas flow of 50 ml/min is used. Each sample is melt pressed into a thin film at about 175°C; the melted sample is then air-cooled to room temperature (approx. 25°C). The film sample is formed by pressing a "0.1 to 0.2 gram" sample at 175°C at 1,500 psi, and 30 seconds, to form a "0.1 to 0.2 mil thick" film. A 3-10 mg, 6 mm diameter specimen is extracted from the cooled polymer, weighed, placed in a light aluminum pan (ca 50 mg), and crimped shut. Analysis is then performed to determine its thermal properties.

The thermal behavior of the sample is determined by ramping the sample temperature up and down to create a heat flow versus temperature profile. First, the sample is rapidly heated to 180°C, and held isothermal for five minutes, in order to remove its thermal history. Next, the sample is cooled to -40°C, at a 10 °C/minute cooling rate, and held isothermal at -40°C for five minutes. The sample is then heated to 150°C (this is the "second heat" ramp) at a 10°C/minute heating rate. The cooling and second heating curves are recorded. The cool curve is analyzed by setting baseline endpoints from the beginning of crystallization to -20°C. The heat curve is analyzed by setting baseline endpoints from -20°C to the end of melt. The values determined are peak melting temperature (Tₘ), peak crystallization temperature (T_{c}), heat of fusion (H_{f}) (in Joules per gram), and the calculated % crystallinity for the samples using: % Crystallinity = ((H_{f})/(290 J/g)) × 100. The heat of fusion (H_{f}) and the peak melting temperature are reported from the second heat curve. Peak crystallization temperature can be determined from the cooling curve.

### Heat Seal Strength

Heat seal strength, or seal strength is measured using ASTM F88 as follows.

A film having a thickness of 2 mils is placed on a sheet of amorphous polyethylene terephthalate having a thickness of 10 mils, with the sealant layer of the multilayer film contacting the sheet. Then, a seal bar of a KOPPE Heat Sealer is pressed down against the multilayer film at a variety of sealing temperatures ranging from 80° to 150° C in 10° C increments, each for a dwell time of one second and at a seal pressure of one bar (i.e., a different film sample is sealed at each sealing temperature between 80° and 150° C for evaluation).

The sealed samples are conditioned for 24 hours (at 23°C and 50% relative humidity) and cut into strips having a width of one inch in the machine direction of the multilayer film. The strips are then pulled on an Instron device at a rate of 10 inches/min under the holding method of Technique A described in ASTM F88. The peak load average from five replicate test samples is recorded.

### Heat Seal Initiation Temperature

From the above heat seal strength measurements, the heat seal initiation temperature (HSIT) is determined as the lowest temperature at which the seal strength reaches above 454 g/25 mm under ASTM F88.

Some embodiments of the invention will now be described in detail in the following Examples.

### Examples

The following raw materials are used in the examples discussed below:

| Product | Melt Index (I₂) (dg/min) | Density (g/cc) | Ethyl Acrylate Content (wt %) (if applicable) | % Crystallinity |
|---|---|---|---|---|
| AMPLIFY™ EA100 | 1.3 | 0.930 | 15.0 | |
| AMPLIFY™ EA101 | 6.0 | 0.931 | 18.5 | |
| AMPLIFY™ EA103 | 21.0 | 0.930 | 19.5 | |
| Elvax 450 | 8 | 0.941 | -- | |
| AFFINITY™ 1840 | 1.0 | 0.909 | -- | 42.3 |
| AFFINITY™ 8100 | 1.0 | 0.870 | -- | 15.6 |
| AFFINITY™ 8200 | 5.0 | 0.870 | -- | 17.7 |
| AMPLIFY™ TY1052H | 1.25 | 0.870 | -- | 15.1 |
| ENGAGE™ 8150 | 0.5 | 0.868 | -- | 16 |

AMPLIFY™ EA100, AMPLIFY™ EA101, and AMPLIFY™ EA103 are ethylene ethyl acrylate copolymers commercially available from The Dow Chemical Company. Elvax 450 is an ethylene vinyl acetate copolymer commercially available from DuPont having a vinyl acetate content of 18 weight percent. AFFINITY™ 1840, AFFINITY™ 8100, AFFINITY™ 8200, and ENGAGE™ 8150 are polyolefin elastomers commercially available from The Dow Chemical Company. AMPLIFY™ TY 1052H is a maleic anhydride grafted polyolefin elastomer commercially available from The Dow Chemical Company.

The above-referenced materials are used to form different sealant layers (Layer A) in different multilayer films having a structure of Layer A/Layer B/Layer C (A/B/C). Layer B for each film is ELITE™ 5940G which is an enhanced polyethylene commercially available from The Dow Chemical Company having a density of 0.940 g/cm³ and a melt index (I₂) of 0.85 g/10 minutes. Layer C for each film is DOWLEX™ 2038.68G which is a linear low density polyethylene commercially available from The Dow Chemical Company having a density of 0.935 g/cm³ and a melt index (I₂) of 1.0 g/10 minutes.

The films are fabricated through a conventional polyethylene blown film line to provide multilayer films with a weight distribution of 25% Layer A/50% Layer B/25% Layer C. The melt temperatures of resin extrusion for Layers A, B and C are 412 °F, 431 °F and 424 °F, respectively. The die diameter of the blown film line is 2.95 inches, the layflat is 12 inches, the blow-up ratio is 2.6, and the die gap is 78.7 mils. The output rate is 36 lbs/hr.

The heat seal strengths and heat seal initiation temperatures of the films are measured using the techniques described above.

Table 1 shows the composition of Layer A in each multilayer film as well as the heat seal strengths and heat seal initiation temperatures. The heat seal strengths shown in Table 1 are the maximum heat seal strengths that are measured in the temperature range of 120° C to 150° C. At higher temperatures, higher heat seal strengths may be observed. The films labeled as Inventive Films are films according to certain embodiments of the present invention and the films labeled as Comparative Films are provided for comparison purposes.

**Table 1**

| | Sealant Layer (Layer A) | | Seal Performance | |
|---|---|---|---|---|
| | **Ethylene Ethyl Acrylate Copolymer and/or Ethylene Vinyl Acetate Copolymer** | **Polyolefin Elastomer** | **Heat seal strength** | **Heat Initiation Temperature (°C)** |
| | **(70 weight % of Layer A)** | **(30 weight % of Layer A)** | **(g/25 mm)** | |
| Inventive Film 1 | AMPLIFY™ EA101 | AFFINITY™ 8100 | 850 | 120 |
| Inventive Film 2 | AMPLIFY™ EA101 | AFFINITY™ 8200 | 1353 | 120 |
| Inventive Film 3 | Blend of AMPLIFY™ EA100 and AMPLIFY™ EA101 | AMPLIFY™ TY1052H | 895 | 120 |
| | (EA100:EA101 blend ratio= 1:1) | | | |
| | (blended I₂=2.6) | | | |
| Inventive Film 4 | AMPLIFY™ EA101 | AMPLIFY™ TY 1052H | 1033 | 120 |
| Inventive Film 5 | AMPLIFY™ EA103 | AFFINITY™ 8100 | 1157 | 120 |
| Inventive Film 6 | Blend of AMPLIFY™ EA101 and AMPLIFY™ EA103 | AFFINITY™ 8200 | 1271 | 110 |
| | (blend ratio (EA101:EA103 blend ratio = 4:6) | | | |
| | (blended I₂ = 12) | | | |
| Inventive Film 7 | AMPLIFY™ EA103 | AFFINITY™ 8200 | 1543 | 110 |
| Inventive Film 8 | Blend of AMPLIFY™ EA101 and Elvax 450 | AFFINITY™ 8200 | 1226 | 110 |
| | (blend ratio EA101:Elvax = 4:3) | | | |
| | (blended I₂ = 6.8) | | | |
| Inventive Film 9 | Blend of AMPLIFY™ EA101 and Elvax 450 | AFFINITY™ 8200 | 1108 | 110 |
| | (EA101:Elvax blend ratio = 2:5) | | | |
| | (blended I₂ = 7.4) | | | |
| | | | | |
| Comparative Film 1 | AMPLIFY™ EA101 | ENGAGE™ 8150 | 924 | 140 |
| Comparative Film 2 | AMPLIFY™ EA100 | ENGAGE™ 8150 | 729 | 120 |
| Comparative Film 3 | AMPLIFY™ EA100 | AFFINITY™ 8100 | 632 | 120 |
| Comparative Film 4 | AMPLIFY™ EA100 | AFFINITY™ 8200 | 767 | 120 |
| Comparative Film 5 | AMPLIFY™ EA100 | AMPLIFY™ | 617 | 120 |
| | | TY1052H | | |
| Comparative Film 6 | AMPLIFY™ EA103 | ENGAGE™ 8150 | 795 | 120 |
| Comparative Film 7 | AMPLIFY™ EA100 | AFFINITY™ 1840 | < 100 | NA |

As shown above, the sealant layers in the inventive multilayer films (Inventive Films 1-9) demonstrate both higher heat seal strength (equal to or higher than 850 g/25 mm) and lower heat seal initiation temperature (equal to or lower than 120 °C) than those of Comparative Films.

## Claims

1. A multilayer film comprising:
Layer A which is a sealant layer having a top facial surface and a bottom facial surface and comprising:
(a) a copolymer comprising ethylene and alkylacrylate, wherein the copolymer has a melt index (I₂) of 2 to 30 g/10 minutes and wherein the total amount of alkylacrylate in the copolymer is 5 to 30 weight percent based on the weight of the copolymer; and
(b) a polyolefin elastomer having a crystallinity of 30% or less and a melt index (I₂) of 1.0 g/10 minutes or more; and
Layer B having a top facial surface and a bottom facial surface;
wherein the top facial surface of Layer B is in adhering contact with a bottom facial surface of Layer A.

2. The multilayer film of claim 1, wherein the polyolefin elastomer is a polyethylene elastomer having a density of 0.853 to 0.890 g/cm³.

3. The multilayer film of claim 1, wherein the polyolefin elastomer is an ethylene/α-olefin interpolymer having a density of 0.853 to 0.890 g/cm³.

4. The multilayer film of any of the preceding claims, wherein the copolymer comprises ethylene and at least one of methylacrylate and ethylacrylate.

5. The multilayer film of any of the preceding claims, wherein Layer A comprises 40 to 90 weight percent of the copolymer based on the weight of Layer A.

6. The multilayer film of any of the preceding claims, wherein Layer A comprises 10 to 60 weight percent of the polyolefin elastomer based on the weight of Layer A.

7. The multilayer film of any of the preceding claims, wherein Layer A comprises at least one additional polymer.

8. The multilayer film of any of claims 1-5, wherein Layer A further comprises ethylene vinyl acetate.

9. The multilayer film of any of the preceding claims, wherein Layer A is corona treated.

10. The multilayer film of any of the preceding claims, wherein Layer B comprises polyethylene.

11. The multilayer film of any of the preceding claims, further comprising at least one additional layer, wherein the top facial surface of Layer A is the top facial surface of the film.

12. The multilayer film of claim 11, wherein the additional layer comprises polyethylene terephthalate, polypropylene, polyethylene, polyamide, ethylene vinyl alcohol, polycarbonate, polystyrene, poly(methyl methacrylate), or combinations thereof.

13. The multilayer film of claim 11 or claim 12, wherein the additional layer is laminated to the bottom facial surface of Layer B.

14. The multilayer film of claim 11, wherein the additional layer is coextruded with Layer A and Layer B.

15. A food package comprising the multilayer film of any of claims 1-14 and a tray, wherein the top facial surface of Layer A is sealed to at least a portion of the tray.

16. The food package of claim 15, wherein the tray is formed from amorphous polyethylene terephthalate.
